# EUROPÄISCHE PATENTSCHRIFT

(11) **EP 3 191 287 B1**
(45) Veröffentlichungstag und Bekanntmachung des Hinweises auf die Patenterteilung: **06.05.2020**
(21) Anmeldenummer: 15775361.7
(22) Anmeldetag: 10.09.2015
(51) Int. Cl.: B29C 45/27, B29C 45/30

(54) **VERFAHREN UND SPRITZGUSSDÜSE ZUM HERSTELLEN VON SPRITZGUSSTEILEN AUS KUNSTSTOFF**
METHOD AND INJECTION-MOULDING NOZZLE FOR PRODUCING INJECTION-MOULDED PARTS FROM PLASTIC
PROCÉDÉ ET BUSE DE MOULAGE PAR INJECTION POUR FABRIQUER DES PIÈCES MOULÉES À PARTIR D'UNE MATIÈRE DE PLASTIQUE

(30) Priorität: 10.09.2014 AT 506312014
(43) Veröffentlichungstag der Anmeldung: 19.07.2017
(73) Patentinhaber: Haidlmair Holding GmbH, 4542 Nussbach (AT)
(72) Erfinder: KOLNBERGER, Patrick, A-4643 Pettenbach (AT); WINDHAGER, Willibald, A-4591 Molln (AT)
(74) Vertreter: Hübscher & Partner Patentanwälte GmbH
(86) Internationale Anmeldenummer: PCT/AT2015/050225
(87) Internationale Veröffentlichungsnummer: WO 2016/037209

(56) Entgegenhaltungen:
- EP-A1- 0 299 333
- EP-A1- 1 561 564
- EP-A2- 0 162 438
- DE-A1- 4 125 975
- JP-A- H0 232 825
- JP-A- H0 232 825
- US-A- 4 412 805
- US-A- 5 219 593
- US-A1- 2007 003 661
- UNGER P: "HEISSKANALSYSTEM MIT INDIREKT BEHEIZTEM WAERMELEITTORPEDO", KUNSTOFFE, CARL HANSER VERLAG, MUNCHEN, DE, Bd. 70, Nr. 11, 1. November 1980 (1980-11-01), Seiten 730-737, XP001176414, ISSN: 0023-5563
- "DAS ENDE DES FADENS", PLASTVERARBEITER, HUETHIG GMBH, HEIDELBERG, DE, Nr. 7, 1. Juli 1999 (1999-07-01), Seite 74/75, XP000958841, ISSN: 0032-1338

## Beschreibung

### Technisches Gebiet

Die Erfindung bezieht sich auf ein Verfahren zum Herstellen von Spritzgussteilen aus Kunststoff mit einem Spritzgusswerkzeug, wobei die Kunststoffschmelze in Form wenigstens eines bandförmigen Schmelzestrangs durch einen Düsenschlitz in eine Kavität des Spritzgusswerkzeugs eingespritzt wird, bevor das Spritzgussteil nach einem Erstarren der Kunststoffschmelze entformt wird, sowie auf eine Spritzgussdüse zur Durchführung des Verfahrens.

### Stand der Technik

Damit bei Spritzgusswerkzeugen die Kunststoffschmelze in der Spritzgussdüse nicht abkühlt, sind Heißkanaldüsen (DE 26 07 644 A1) bekannt, bei denen in das eine kreisförmige Düsenöffnung aufweisende Gehäuse der Spritzgussdüse ein zur Düsenöffnung koaxialer, wärmeleitender, beheizbarer Düsenkern eingesetzt ist, der in einer kegelförmigen Spitze ausläuft, sodass sich zwischen dem Gehäuse und der kegelförmigen Spitze des Düsenkerns ein sich in Strömungsrichtung verjüngender, ringförmiger, in der kreisförmigen Düsenöffnung des Gehäuses ausmündender Düsenkanal für die Kunststoffschmelze ergibt. Nachteilig bei solchen Spritzgussdüsen ist, dass der erreichbare Schmelzedurchsatz begrenzt ist, weil eine Steigerung der Fließgeschwindigkeit zu einer größeren Scherbeanspruchung der Kunststoffschmelze im Düsenkanal und damit zu einer zusätzlichen Erwärmung der Kunststoffschmelze mit der Gefahr einer Materialschädigung führt. Wird hingegen die Düsenöffnung vergrößert, so muss mit höheren Schmelzetemperaturen im Mittenbereich der Düsenöffnung mit der Folge einer ungleichmäßigen Erstarrung des in die Kavität des Formwerkzeugs eingebrachten Schmelzestroms gerechnet werden, was nicht nur Qualitätseinbußen des Spritzgussteils, sondern auch Schwierigkeiten im Abreissverhalten des Angusses nach sich ziehen kann. Aus diesen Gründen werden für die Fertigung von größervolumigen Spritzgussteilen mehrere Spritzgussdüsen eingesetzt, die eine vergleichsweise aufwendige Steuerung erfordern und unter Umständen die Gefahr des Auftretens von Bindenähten im Stoßbereich innerhalb der Kavität aufeinandertreffender Schmelzeströme vergrößern, sodass einerseits mit einer Materialschädigung im Bereich der Bindenähte und anderseits mit einer Beeinträchtigung des optischen Erscheinungsbilds der Spritzgussteile gerechnet werden muss.

Um insbesondere für plattenförmige Spritzgussteile die Kunststoffschmelze in einem auf die Form der Spritzgussteile abgestimmten Strom in die Kavität des Formwerkzeugs einspritzen zu können, wird die Kunststoffschmelze über einen Filmanguss in einem bandförmigen Strang in die Kavität eingebracht. Der Filmanguss umfasst dabei einen Düsenkanal, der sich auf die Länge eines in die Kavität mündenden Düsenschlitzes verbreitert. Mit Hilfe solcher Filmangüsse lässt sich zwar der Schmelzedurchsatz durch die Düsenöffnung vergrößern, doch erstarrt der Filmanguss mit der Kunststoffschmelze in der Kavität, sodass der mit dem Spritzgussteil entformte Filmanguss nachträglich vom Spritzgussteil abgetrennt werden muss.

Um den Spritzdruck bei Heißkanaldüsen senken und damit die Qualität des herzustellenden Spritzgussteils verbessern zu können, ist es darüber hinaus bekannt (DE 41 25 975 A1), in das Gehäuse, das durch eine äußere Heizung erwärmt wird, einen Düsenkern mit einem Düsenschlitz einzusetzen, was zu einer Vergrößerung des Übertrittquerschnitts für die Kunststoffschmelze und damit zu einer Verringerung des Spritzdrucks bei gleichbleibendem Schmelzedurchsatz führt. Da der Düsenkern einen mit einem Quersteg versehenen Rotationskörper bildet, der mit radialem Abstand in eine zylindrische Bohrung des Gehäuses eingesetzt ist, ergibt sich für die Verteilung der durch einen zentralen Speisekanal zugeführten Kunststoffschmelze auf den anschließenden Düsenkanal zur Schlitzdüse ein durch den Quersteg in zwei einander gegenüberliegende Abschnitte unterteilten, zylindrischer Ringkanal mit einem gleichbleibenden Strömungsquerschnitt. Trotz der gleichmäßigen Schmelzezufuhr durch den Ringkanal zum Düsenkanal kommt es jedoch zu Störungen im Fließverhalten der Kunststoffschmelze im Bereich des Übertrittquerschnitts von der Spritzgussdüse zur Kavität des Formwerkzeugs und damit zu optischen und mechanischen Fehlern im hergestellten Spritzgussteil. Dazu kommt, dass durch die außenliegende Heizung des Gehäuses und dem Wärmeübergang vom Gehäuse auf den für sich nicht beheizbaren, nur über den Quersteg erwärmbaren Düsenkern im Bereich des Düsenschlitzes Wärmeverhältnisse geschaffen werden, die einen Abriss des Angusses entlang des Düsenschlitzes beim Entformen des Spritzgussteils unmöglich machen.

### Darstellung der Erfindung

Der Erfindung liegt somit die Aufgabe zugrunde, ein Verfahren zum Einspritzen einer Kunststoffschmelze in eine Kavität eines Formwerkzeugs so auszugestalten, dass auch bei höheren Schmelzedurchsätzen ein vorteilhafter Angussabriss sichergestellt werden kann, ohne eine Beeinträchtigung der Qualität des Spritzgussteils befürchten zu müssen.

Ausgehend von einem Verfahren der eingangs geschilderten Art, löst die Erfindung die gestellte Aufgabe dadurch, dass der Kunststoffschmelze während des Erstarrens in der Kavität im Angussbereich Wärme zugeführt wird und dass der Anguss beim Entformen des Spritzgussteils aufgrund des Temperaturgradienten zwischen dem erstarrten Spritzgussteil und der Kunststoffschmelze im Angussbereich entlang des Düsenschlitzes abgerissen wird.

Die Erfindung geht von der Erkenntnis aus, dass die Scherbeanspruchung einer durch eine Schlitzdüse in eine Kavität eingespritzten Kunststoffschmelze mit der Scherbeanspruchung in einer Runddüse vergleichbar ist, deren Durchmesser angenähert der Schlitzbreite entspricht. Über die Wahl der Breite des bandförmigen Schmelzestrangs kann folglich der Schmelzedurchsatz beliebig gesteigert werden, ohne eine vergrößerte Scherbeanspruchung mit den nachteiligen Folgen einer dadurch bedingten Temperaturerhöhung des Kunststoffs über die zulässigen Schmelzetemperaturen befürchten zu müssen. Voraussetzung für den Angussabriss bei der Entformung des Spritzgussteils ist allerdings, dass zwischen der in der gekühlten Kavität erstarrten Kunststoffschmelze und dem Anguss über die gesamte Längserstreckung der Schlitzdüse ein entsprechender Temperaturgradient sichergestellt werden kann, sodass die von der Temperatur abhängige mechanische Festigkeit des Kunststoffs im Übergangsbereich vom Anguss zum Spritzgussteil bei dessen Entformung einen Abriss des Angusses in der Fläche der Düsenöffnung bedingt, ohne Fäden zu ziehen. Eine solche Einstellung des Temperaturgradienten im Übergangsbereich vom Anguss zum erstarrten Spritzgussteil gelingt durch Wärmezufuhr zum Anguss, in dessen Bereich der Kunststoff somit während der Erstarrung des Spritzgussteils in der gekühlten Kavität schmelzflüssig bleibt. Der sonst den zu entformenden Anguss bildende Düsenbereich ist daher Teil des Heißkanals der Spritzgussdüse. Der sich in einer dünnen Schicht im Bereich der Düsenöffnung ergebende Übergang von der flüssigen Schmelze zum erstarrten Kunststoffkörper führt zu einem Angussabriss in der Fläche der Düsenöffnung und damit zu einem Abriss entlang eines schmalen Oberflächenbereichs des Spritzgussteils, was ein Nachbearbeiten der Abrissstelle im Allgemeinen überflüssig macht.

Um eine vorteilhafte Temperaturführung der Kunststoffschmelze beim Einspritzen in eine entsprechend der Erstarrungstemperatur des eingesetzten Kunststoffs temperierte, im Allgemeinen gekühlte Kavität zu erreichen, kann von einer Spritzgussdüse mit einem erwärmbaren Düsenkern, mit einem den Düsenkern aufnehmenden Gehäuse, mit einem in einer einen Düsenschlitz bildenden Düsenöffnung ausmündenden, sich in Strömungsrichtung verjüngenden Düsenkanal zwischen dem Gehäuse und dem Düsenkern und mit einem Verteilerkanal zwischen einem Speisekanal für die Kunststoffschmelze und dem Düsenkanal ausgegangen werden. Gegenüber bekannten Spritzgussdüsen dieser Art muss jedoch der Düsenkern gegenüber dem Gehäuse erwärmt werden und der an den Düsenschlitz angepasste Düsenkanal zumindest an einen Verteilerkanal anschließen, der mit dem Düsenkanal über eine Drosselzone strömungsverbunden ist. Wesentlich für ein vorteilhaftes Einbringen der Kunststoffschmelze in die Kavität eines Spritzgusswerkzeugs über den Düsenschlitz ist die Aufteilung des Schmelzestroms über die Länge des Düsenschlitzes nach rheologischen Gesichtspunkten, weil nur dann eine im Wesentlichen nur von der Schlitzlänge abhängige Vergrößerung des Schmelzedurchsatzes sichergestellt werden kann. Aus diesem Grund ist der an den Düsenschlitz angepasste Düsenkanal über eine Drosselzone an den Verteilerkanal angeschlossen, die vorzugsweise durch eine sich über die Länge des dem Verteilerkanal zugehörigen Längsabschnitts des Düsenschlitzes erstreckende Verengungen des Strömungsquerschnitts gebildet wird.

Durch diese Maßnahme wird die durch einen Speisekanal zugeführte Kunststoffschmelze zunächst mit Hilfe des Verteilerkanals über einen Strömungsabschnitt verteilt, der der Länge des dem Verteilerkanal zugehörigen Längsabschnitts des Düsenschlitzes entspricht, sodass die Drosselzone über ihren gesamten Erstreckungsbereich mit Kunststoffschmelze beaufschlagt wird und für eine den jeweiligen rheologischen Anforderungen entsprechende Aufteilung des Schmelzestroms über die Länge des Düsenschlitzes sorgt. Außerdem kann die Temperatur des Schmelzestroms mit Hilfe des für sich erwärmbaren, eine Wand des Düsenkanals bildenden Düsenkerns vor dem Austritt aus dem Düsenschlitz gesteuert werden, sodass mit einem derart hinsichtlich seiner Temperatur und seiner Strömungsverteilung gesteuerten Schmelzestrom die Kunststoffschmelze in vorteilhafter Weise in die Kavität eines Spritzgusswerkzeugs eingebracht werden kann, ohne eine Überlastung des Kunststoffs befürchten zu müssen. Erfindungsgemäß kann dementsprechend mehr Kunststoffmaterial bei gleichbleibender oder reduzierter Fließgeschwindigkeit in eine Kavität eingetragen werden. Niedrigere Fließgeschwindigkeiten bedeuten niedrigere Scherbeanspruchungen der Kunststoffschmelze, wodurch die Gefahr von Materialschädigungen und davon abhängig von Festigkeitsverlusten verringert wird. Damit sind die Voraussetzungen für formgenaue Spritzgussteile hoher Qualität unter Wahrung schneller Zykluszeiten gegeben, zumal durch den vom Gehäuse unabhängig beheizbaren Düsenkern im Bereich des Düsenschlitzes Temperaturverhältnisse geschaffen werden können, die einen Angussabriss in der Fläche der Düsenöffnung erlauben.

Zur Aufteilung des Schmelzestroms auf den Erstreckungsbereich der Drosselzone quer zur Strömungsrichtung und zur Vermeidung von Strömungstoträumen kann sich der Strömungsquerschnitt des Verteilerkanals in Strömungsrichtung verjüngen. Außerdem kann sich der Strömungswiderstand der Drosselzone über die Länge des dem Verteilerkanal zugehörigen Abschnitts des Düsenschlitzes ändern. Durch diese Maßnahmen für sich oder in Kombination miteinander kann auf die Strömungsverteilung der aus dem Düsenschlitz austretenden Kunststoffschmelze Einfluss genommen werden.

Der Verteilerkanal, über den die Drosselzone mit Kunststoffschmelze beaufschlagt wird, könnte dem Gehäuse zugeordnet werden. Einfachere Konstruktionsbedingungen ergeben sich allerdings, wenn der Düsenkern den Verteilerkanal in Form einer gegen das Gehäuse offenen Ausnehmung ausbildet, die wegen ihrer Lage auf der Außenseite des Düsenkerns einen einfachen Bearbeitungszugang schafft. Außerdem wirkt sich die im Bereich des Düsenkerns vergrößerte Oberfläche des Verteilerkanals vorteilhaft auf den Wärmeübergang vom erwärmten Düsenkern auf die Kunststoffschmelze aus. Die der Ausnehmung des Düsenkerns gegenüberliegende Begrenzung des Verteilerkanals kann durch das Gehäuse, aber auch durch einen Gehäuseeinsatz gebildet werden.

Umschließt der Düsenkanal den Düsenkern allseitig, so kann insbesondere in den Endbereichen des Düsenschlitzes eine gleichmäßigere Temperaturverteilung der Kunststoffschmelze erreicht werden. Außerdem ergibt sich in den Endbereichen des Düsenschlitzes eine verbesserte Führung des Schmelzestroms, was eine Qualitätssteigerung für die herzustellenden Spritzgussteil nach sich zieht.

Zur besseren Aufteilung des Schmelzestroms auf den gesamten Erstreckungsbereich der Drosselzone kann der Düsenkanal an mindestens zwei Verteilerkanäle angeschlossen werden, über die die Kunststoffschmelze genauer aufgeteilt werden kann. Dies gilt vor allem für die Schmelzezufuhr von einander in Bezug auf die Längsachse des Düsenschlitzes gegenüberliegenden Längsseiten des Düsenkerns, der dann auf einander gegenüberliegenden Längsseiten je einen über eine Drosselzone an den Düsenkanal angeschlossen Verteilerkanal aufweisen kann.

Die gleichmäßige Beaufschlagung der Drosselzone im Stoßbereich zwischen zwei Verteilerkanälen kann dadurch verbessert werden, dass die Verteilerkanäle an ihren Strömungsenden miteinander verbunden sind. Diese Maßnahme hilft außerdem, die Ausbildung von sonst aufgrund eines solchen Stoßbereichs möglichen Bindenähten zu vermeiden. Über zwei oder mehrere Verteilerkanäle können darüber hinaus unterschiedliche Kunststoffe über eine gemeinsame Spritzgussdüse in die Kavität eines Spritzgusswerkzeugs eingespritzt werden.

Um die Ausströmbedingungen der Kunststoffschmelze aus dem Düsenschlitz zu verbessern, kann der Düsenkern im Bereich des Düsenkanals einen an die Drosselzone anschließenden Einlaufabschnitt und einen nachgeordneten, gegenüber dem Einlaufabschnitt einen kleineren Neigungswinkel zur Düsenausströmrichtung aufweisenden Auslaufabschnitt bilden. Der Auslaufabschnitt ergibt eine Leitfläche für die Kunststoffschmelze, die somit in Ausströmrichtung des Düsenschlitzes umgelenkt wird.

Das Gehäuse der Spritzgussdüse bildet mit der den Düsenschlitz aufweisenden Außenfläche eine die Kavität begrenzende Formfläche des Spritzgusswerkzeugs und muss daher insbesondere bei gekühlten Spritzgusswerkzeugen zumindest in diesem Außenbereich gekühlt werden. Da über den Düsenkern Wärme in die Kunststoffschmelze eingetragen wird, empfiehlt es sich, das Gehäuse mit einer Wärmedämmung gegenüber dem beheizten Düsenkern zu versehen, was sich nicht nur auf den Energiehaushalt, sondern auch vorteilhaft auf den Temperaturverlauf innerhalb der Schmelzeströmung mit der Folge auswirkt, dass unter Umständen der Einspritzdruck verringert werden kann.

Um auf den Angussabriss konstruktiv Einfluss nehmen zu können, kann der Düsenkern zum Schließen des Düsenschlitzes verschiebbar im Gehäuse gelagert und mit einem entsprechenden Stelltrieb verbunden sein, sodass nach dem Füllen der Kavität mit Kunststoff der Düsenschlitz geschlossen und damit der Anguss vom Spritzgussteil getrennt werden kann. Darüber hinaus kann die Verweilzeit des Spritzgussteils in der Kavität verkürzt werden, da das Erstarren der Kunststoffschmelze im Bereich der Düsenöffnung nicht abgewartet zu werden braucht.

Wie bereits erwähnt wurde, wird die Temperatur des Spritzgusswerkzeugs vorzugsweise entsprechend der Erstarrungstemperatur des jeweils eingesetzten Kunststoffs gesteuert, damit die in die Kavität eingespritzte Kunststoffschmelze unter Wahrung kurzer Zykluszeiten zum Spritzgussteil erstarrt. Dem Erstarrungsverlauf der Kunststoffschmelze im Bereich des Düsenschlitzes kommt dabei im Hinblick auf den Angussabriss eine besondere Bedeutung zu. Aus diesem Grunde kann das Gehäuse im Bereich des Düsenschlitzes mit der Wirkung gekühlt werden, dass sich ein angestrebter Temperaturgradient zwischen dem erstarrten Spritzgussteil und dem schmelzflüssigen Anguss im Bereich des Düsenschlitzes einstellt.

Besonders günstige Konstruktionsbedingungen ergeben sich, wenn das Gehäuse eine die Kavität des Spritzgusswerkzeugs begrenzende Formplatte bildet, weil in diesem Fall die Notwendigkeit entfällt, das Gehäuse als bündigen Einsatz für eine Formplatte ausführen zu müssen. Außerdem fördert eine Formplatte, die das Gehäuse für die Einspritzdüse formt, eine gleichmäßige Temperatursteuerung des Spritzgusswerkzeugs.

Um den Schmelzedurchsatz durch eine Spritzgussdüse bei einem beschränkten Platzangebot ohne eine Erhöhung der Scherbelastungen erhöhen zu können, können der Düsenschlitz und der in den Düsenschlitz ausmündende Düsenkanal mehrere vorzugsweise sternförmig angeordnete Äste aufweisen, sodass die den Schmelzedurchsatz bestimmende Länge des Düsenschlitzes aufgrund der Schlitzaufteilung in mehrere Äste verlängert wird, und zwar mit einem beschränkten Platzbedarf für das Gehäuse.

Weist der Düsenkern eine kreiszylindrische Grundform mit zwei zur Längsachse des Düsenschlitzes bzw. zu den Ästen des Düsenschlitzes symmetrischen Dachflächen im Bereich des Düsenkanals auf, so ergeben sich vom Einsatz von Runddüsen her bekannte, vorteilhafte Konstruktionsbedingungen. Der Schmelzedurchsatz bleibt allerdings aufgrund der gegebenen Grenzen für den Durchmesser des zylindrischen Kernkörpers beschränkt, wenn der Düsenschlitz nicht beispielsweise durch Ausbildung eines Kreuzschlitzes in mehrere Äste aufgeteilt wird.

Spritzgussdüsen der erfindungsgemäßen Art mit einem Düsenschlitz können zu einer Konstruktionsvereinfachung von Spritzgusswerkzeugen mit zwei oder mehreren Kavitäten führen, wenn zumindest zwei Kavitäten eine gemeinsame Spritzgussdüse zugeordnet wird, deren Düsenschlitz sich beidseits einer Trennwand zwischen den Kavitäten erstreckt.

### Kurze Beschreibung der Zeichnungen

In der Zeichnung ist der Erfindungsgegenstand beispielsweise dargestellt. Es zeigen
- Fig. 1: ein zum Teil aufgerissenes Schaubild einer erfindungsgemäßen Spritzgussdüse,
- Fig. 2: diese Spritzgussdüse in einem zum Düsenschlitz senkrechten Querschnitt,
- Fig. 3: einen Schnitt nach der Linie III-III der Fig. 2,
- Fig. 4: den Düsenkern in einer Seitenansicht,
- Fig. 5: den Düsenkern nach der Fig. 4 in einer stirnseitigen Ansicht,
- Fig. 6: eine Ausführungsvariante einer in ein Spritzgusswerkzeug eingesetzten Spritzgussdüse in einem schematischen Querschnitt,
- Fig. 7: eine zum Teil aufgerissene Ansicht einer Konstruktionsvariante eines Düsenkerns in Längsrichtung des Düsenschlitzes,
- Fig. 8: den Düsenkern nach der Fig. 7 in einer Draufsicht,
- Fig. 9: eine Konstruktionsvariante eines Düsenkerns in einem vereinfachten Schaubild,
- Fig. 10: diesen Düsenkern in einer Draufsicht in einem größeren Maßstab,
- Fig. 11: das Gehäuse für den Düsenkern gemäß den Fig. 9 und 10 in einem geschnittenen Schaubild und
- Fig. 12: ein Spritzgusswerkzeug im Bereich einer sich über zwei Kavitäten erstreckenden Spritzgussdüse in einem Längsschnitt durch die Spritzgussdüse.

### Weg zur Ausführung der Erfindung

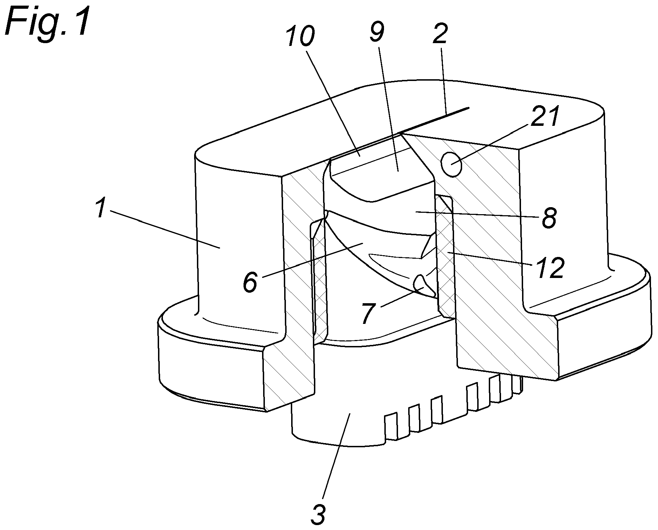

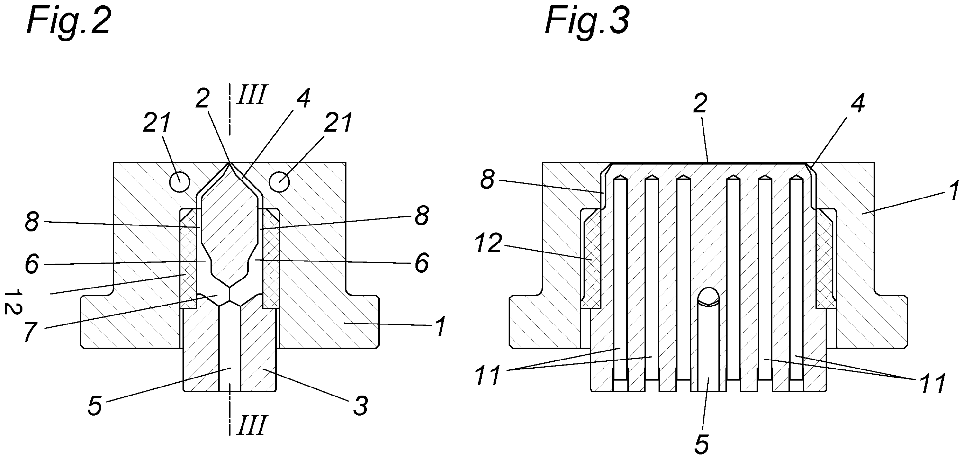

Die Spritzgussdüse nach den Fig. 1 bis 5 umfasst ein Gehäuse 1, das einen Düsenschlitz 2 bildet, sowie einen vom Gehäuse 1 aufgenommenen Düsenkern 3, zwischen dem und dem Gehäuse 1 ein sich in Strömungsrichtung verjüngender Düsenkanal 4 ergibt, der den Düsenkern 3 vorzugsweise vollständig umschließt. Zur Beaufschlagung dieses Düsenkanals 4 mit einer Kunststoffschmelze weist der Düsenkern 3 einen mittigen Speisekanal 5 auf, an den auf den beiden Längsseiten des Düsenkerns 3 vorgesehene Verteilerkanäle 6 anschließen. Es wäre aber auch möglich die beiden Verteilerkanäle 6 nicht über eine Verzweigung 7 eines gemeinsamen Speisekanals 5, sondern gesondert anzuspeisen, beispielsweise um unterschiedliche Kunststoffe schichtartig einspritzen zu können.

Die von der Verzweigung 7 des mittigen Speisekanals 5 ausgehenden Verteilerkanäle 6 bilden jeweils zwei symmetrisch ausgebildete, sich in Strömungsrichtung verjüngende Kanaläste, die an ihren Enden mit den entsprechenden Kanalästen des gegenüberliegenden Verteilerkanals 6 strömungsverbunden sind, sodass die konstruktiven Voraussetzungen für eine den rheologischen Anforderungen vorteilhaft entsprechende Strömungsausbildung der Kunststoffschmelze über den gesamten Erstreckungsbereich des Düsenschlitzes 2 geschaffen werden. Gemäß dem Ausführungsbeispiel sind die Verteilerkanäle 6 in Form einer gegen das Gehäuse 1 offenen Ausnehmung ausgebildet, was nicht nur einfache Herstellungsbedingungen mit sich bringt, sondern auch einen guten Wärmeübergang vom erwärmten Düsenkern 3 auf die Kunststoffschmelze im Bereich der Verteilerkanäle 6 zufolge der durch die Ausnehmungen vergrößerten Oberfläche des Düsenkerns 3 sicherstellt.

Die Verteilung der Kunststoffschmelze über den Erstreckungsbereich des Düsenschlitzes 2 ist zwar notwendig, jedoch nicht hinreichend, um die angestrebte Strömungsverteilung über die Längserstreckung des Düsenschlitzes 2 gewährleisten zu können. Dies gelingt erst, wenn die Beaufschlagung des Düsenkanals 4 mit der über die Verteilerkanäle 6 zugeführten Kunststoffschmelze über eine Drosselzone 8 erfolgt, über die die Verteilerkanäle 6 an den Düsenkanal 4 angeschlossen sind. Die Drosselzone 8 wird im Allgemeinen durch Verengungen des Strömungsquerschnitts festgelegt, die sich jeweils über die Länge des dem Verteilerkanal 6 zugehörigen Abschnitts des Düsenschlitzes 2 erstrecken, sodass die Kunststoffschmelze über den gesamten Erstreckungsbereich des Düsenschlitzes 2 vorgegebenen Druckverhältnissen ausgesetzt ist. Die Drosselwirkung kann dabei zur Einflussnahme auf die Strömungsverteilung über den Strömungsquerschnitt unterschiedlich sein.

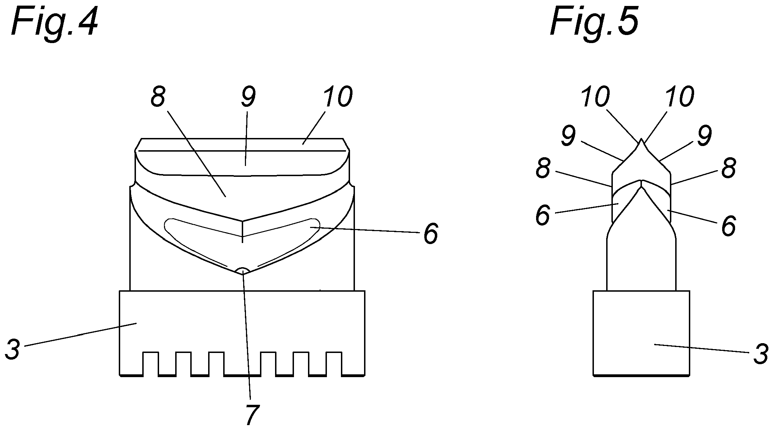

Um die Strömungsverhältnisse für die aus dem Düsenschlitz 2 austretende Kunststoffschmelze zu verbessern, kann der Düsenkern 3 im Bereich des Düsenkanals 4 einen an die Drosselzone 8 anschließenden Einlaufabschnitt 9 und einen nachgeordneten Auslaufabschnitt 10 bilden, der gegenüber der Düsenausströmrichtung einen kleineren Neigungswinkel als der Einlaufabschnitt 9 aufweist, wie dies insbesondere den Fig. 1 und 5 entnommen werden kann. Durch den geringeren Neigungswinkel des Auslaufabschnitts 10 erfährt die Kunststoffschmelze eine zusätzliche Umlenkung in Richtung des Düsenschlitzes 2.

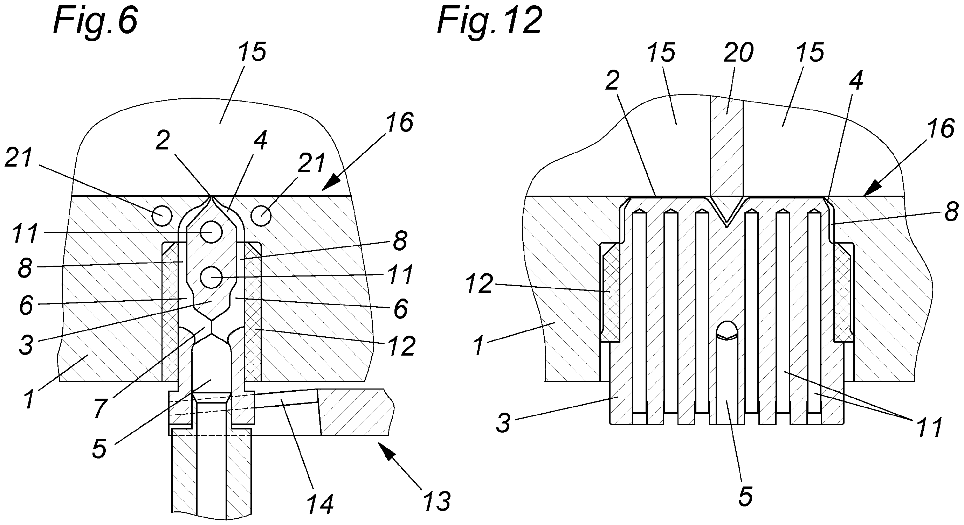

Voraussetzung für einen Angussabriss bei der Entformung eines Spritzgussteils ist, dass die Kunststoffschmelze im Düsenkanal 4 nicht erstarrt. Der Düsenkern 3 muss daher entsprechend erwärmt werden, um der Kunststoffschmelze auch im Bereich des Düsenkanals 4 Wärme zuführen zu können. Obwohl eine Erwärmung des Düsenkerns auch über das Gehäuse 1 möglich ist, ergeben sich günstigere Erwärmungsbedingungen, wenn der Düsenkern 3 unmittelbar beheizt wird. Zu diesem Zweck sind gemäß dem dargestellten Ausführungsbeispiel in den Düsenkern 3 elektrische Heizpatronen 11 eingesetzt, die für eine gesteuerte Erwärmung des Düsenkerns 3 sorgen. Die Heizpatronen 11 verlaufen gemäß dem Ausführungsbeispiel senkrecht zum Düsenschlitz 2, weil aufgrund der Platzverhältnisse dadurch der Wärmeeintrag in den sich verjüngenden Endabschnitt des Düsenkerns 3 erleichtert wird. Diese Anordnung der Heizpatronen 11 ist jedoch nicht zwingend. In der Fig. 6 ist ein Düsenkern 3 mit parallel zum Düsenschlitz 2 verlaufenden Heizpatronen 11 angedeutet. Es braucht wohl nicht besonders erwähnt zu werden, dass die elektrische Heizung auch durch eine Heizung mit Hilfe eines den Düsenkern 3 durchströmenden Wärmeträgers ersetzt werden kann.

Um Wärmeverluste durch einen Wärmeübergang von der Kunststoffschmelze auf das Gehäuse 1 zu verringern, kann das Gehäuse 1 gegenüber dem Düsenkern durch eine Wärmedämmung 12 abgeschirmt werden, die vorteilhaft die gehäuseseitige Wand der Verteilerkanäle 6 zumindest abschnittsweise bildet. Diese Wärmedämmung, die den Düsenkern 2 in Form eines Mantels umschließt, braucht nicht selbst aus einem wärmedämmenden Werkstoff hergestellt zu werden. Es ist durchaus möglich, den Wärmeübergang von der an sich einen schlechten Wärmeleiter bildenden Kunststoffschmelze auf das Gehäuse 1 durch einen bereichsweisen Luftspalt zwischen der Wärmedämmung 12 und dem Gehäuse 1 zu behindern, beispielsweise dadurch, dass die Außenfläche der Wärmedämmung 12 mit einer Riffelung versehen wird.

Zum Unterschied zur Ausführungsform nach den Fig. 1 bis 5 ist gemäß dem Ausführungsbeispiel nach der Fig. 6 der Düsenkern 3 zum Schließen des Düsenschlitzes 2 im Gehäuse 1 verschiebbar gelagert. Zum Verstellen des Düsenkerns 3 in die in der Fig. 6 gezeichnete Schließstellung dient ein Stelltrieb 13, der im Ausführungsbeispiel in Form eines Keilgetriebes 14 ausgebildet ist. Außerdem wird das Gehäuse 1 durch eine die Kavität 15 eines Spritzgusswerkzeugs begrenzende Formplatte 16 gebildet, sodass sich ein gesondertes, in eine solche Formplatte 16 einzusetzendes Gehäuse für die Spritzgussdüse erübrigt.

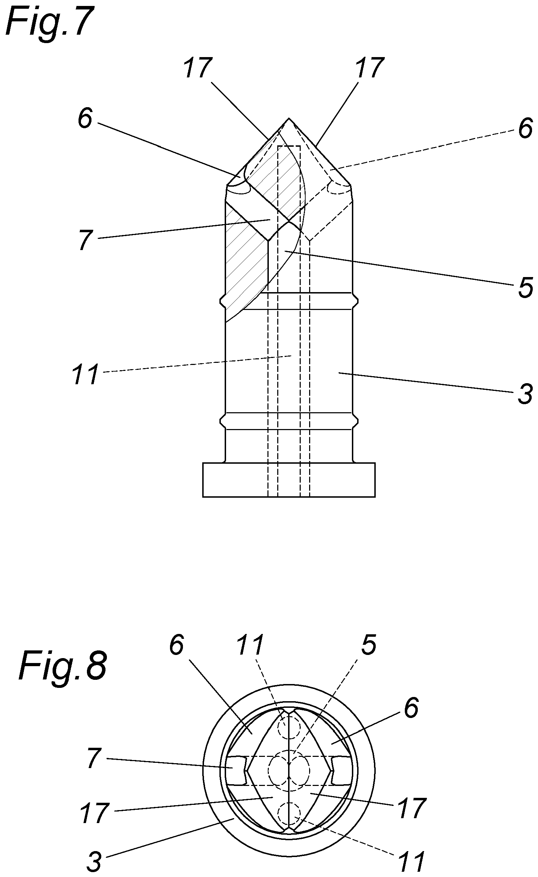

In den Fig. 7 und 8 wird eine besonders vorteilhafte Ausführungsform eines Düsenkerns 3 gezeigt, weil die kreiszylindrische Grundform dieses Düsenkerns 3 der einer Runddüse entspricht. Aufgrund der kreiszylindrischen Grundform ergeben sich einfache Abdichtungsbedingungen. Damit ein in einem Düsenschlitz 2 ausmündender Düsenkanal 4 sichergestellt werden kann, ist der zylindrische Düsenkern 3 im Bereich des Düsenkanals 4 mit zwei bezüglich der Längsachse des Düsenschlitzes 2 symmetrischen Dachflächen 17 versehen, die den Düsenkanal 4 begrenzen. Die Schmelzezufuhr erfolgt über einen zentralen Speisekanal 5 mit einer Verzweigung 7, an die sich die Verteilerkanäle 6 anschließen. Die Länge des Düsenschlitzes 2 ist bei einer solchen Ausformung des Düsenkerns 3 naturgemäß auf den Durchmesser des Düsenkerns 3 beschränkt.

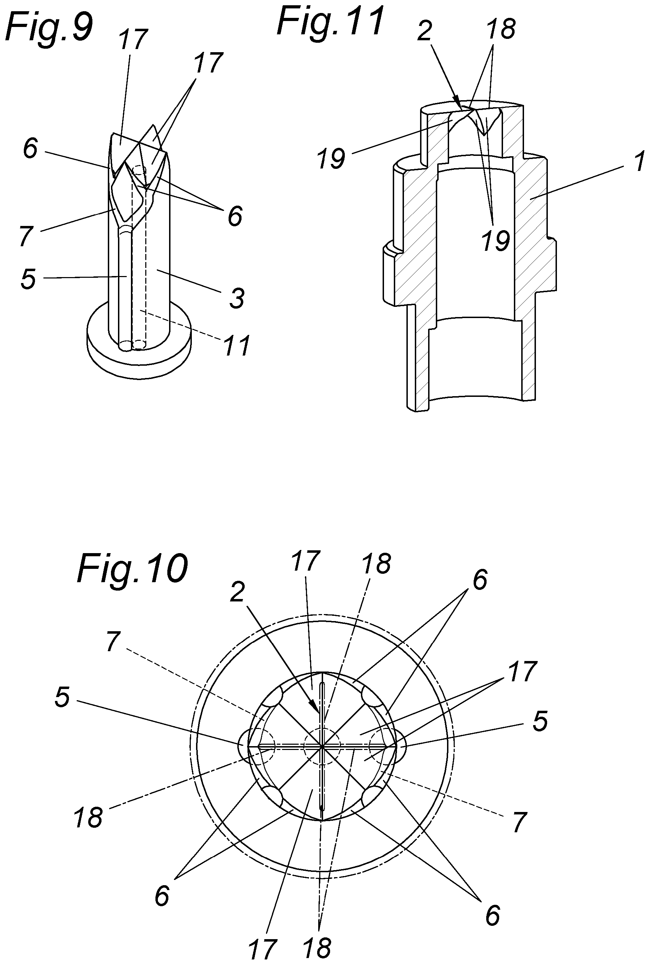

Um trotz der durch das Gehäuse 1 gegebenen räumlichen Beschränkung den Schmelzedurchsatz zu erhöhen, kann der Düsenschlitz 2 und der in den Düsenschlitz 2 ausmündende Düsenkanal 4 zwischen dem Gehäuse 1 und dem Düsenkern 3 mehrere Äste 18 aufweisen, wie dies in den Fig. 9 bis 11 veranschaulicht wird. Gemäß dem Ausführungsbeispiel nach der Fig. 11 bildet das Gehäuse 1 den Düsenschlitz 2 in Form eines Kreuzschlitzes mit vier von einem Zentrum ausgehenden Ästen 18 aus. In der Fig. 10 ist der Düsenschlitz 2 mit seinen vier sich z einem Kreuzschlitz verbindenden Ästen 18 in seiner Lage gegenüber dem Düsenkern 3 strichpunktiert angedeutet. Der in seiner Grundform kreiszylindrische Düsenkern 3 ist gemäß den Fig. 9 und 10 im Bereich des Düsenkanals 4 mit paarweise jedem Ast 18 des Düsenschlitzes 2 zugehörigen Dachflächen 17 versehen, die in einer der Kreuzform des Düsenschlitzes 2 entsprechenden kreuzförmigen Kante auslaufen. Zwischen den Dachflächen 17 des Düsenkerns 3 und entsprechenden Gegenflächen 19 des Gehäuses 1 ergibt sich bei in das Gehäuse 1 eingesetztem Düsenkern 3 der in den Kreuzschlitz ausmündende Düsenkanal 4, dem abschnittsweise im Düsenkern 3 geformte Verteilerkanäle 6 zugeordnet sind, die auf einander gegenüberliegenden Seiten des Düsenkerns 3 über je eine Verzweigung 7 an einen Speisekanal 5 angeschlossen sind. Über entsprechende Querschnittsverengungen ist wiederum für eine Beaufschlagung des Düsenkanals 4 über eine Drosselzone gesorgt, was jedoch aus Übersichtlichkeitsgründen nicht näher dargestellt ist. Die Erwärmung des Düsenkerns 3 erfolgt über eine Heizpatrone 11.

Weist ein Spritzgusswerkzeug mehrere durch eine Trennwand 20 voneinander getrennte Kavitäten 15 auf, wie dies in der Fig. 9 angedeutet ist, so können die durch eine Trennwand 20 voneinander getrennten Kavitäten 15 durch eine gemeinsame Spritzgussdüse beaufschlagt werden, deren Düsenschlitz 2 sich gemäß der Fig. 9 beidseits der Trennwand 20 erstreckt. Hinsichtlich der Verteilung der Kunststoffschmelze über den Erstreckungsbereich des Düsenschlitzes 2 ist auf den Verlauf der Trennwand 20 Rücksicht zu nehmen.

Aufgrund der Einbringung der Kunststoffschmelze in die Kavität 15 eines Spritzgusswerkzeugs über einen Düsenschlitz 2 kann die Scherbelastung der Kunststoffschmelze in Bezug auf den möglichen Schmelzedurchsatz vergleichsweise klein gehalten werden, was eine wesentliche Voraussetzung für ein materialschonendes Einspritzen der Kunststoffschmelze in die Kavität 15 ist. Der Abriss des Angusses hängt von den im Bereich des Düsenschlitzes 2 vorhandenen Festigkeitseigenschaften des Kunststoffs ab, der beim Entformen innerhalb der Kavität 15 fest, im Angussbereich jedoch schmelzflüssig ist, sodass sich im Übergangsbereich von der Kavität 15 zum Düsenkanal 4 ein hoher Temperaturgradient innerhalb einer dünnen Schicht im Bereich des Düsenschlitzes 2 ergibt, wodurch die Voraussetzungen für einen Abriss des Angusses entlang der durch die Öffnung des Düsenschlitzes 2 bestimmten Fläche gegeben sind. Zu diesem Zweck empfiehlt es sich das Gehäuse im Bereich des Düsenschlitzes 2 zu kühlen. In den Fig. 1, 2 und 6 sind hierfür Kühlkanäle 21 angedeutet. Es kann somit bei entsprechender Wahl der Einflussparameter die Abrissfläche in die Formfläche des jeweiligen Spritzgussteils verlegt werden, ohne dass es einer Nachbearbeitung des Angussabrisses bedarf. Der Anguss wird somit in den Bereich des Heißkanals verlegt.

Besonders vorteilhafte Entformungsbedingungen ergeben sich in diesem Zusammenhang gemäß der Fig. 6, wenn die Möglichkeit besteht, den Düsenschlitz 2 mit Hilfe des Düsenkerns 3 zu verschließen.

## Patentansprüche

1. Verfahren zum Herstellen von Spritzgussteilen aus Kunststoff mit einem Spritzgusswerkzeug, das eine Spritzgussdüse mit einem einen Düsenkern (3) aufnehmenden Gehäuse (1) und mit einem in einem Düsenschlitz (2) auslaufenden, sich in Strömungsrichtung verjüngenden Düsenkanal (4) zwischen dem Gehäuse (1) und dem Düsenkern (3) umfasst, wobei die Kunststoffschmelze in Form eines bandförmigen Schmelzestrangs durch den Düsenschlitz (2) in eine Kavität (15) des Spritzgusswerkzeugs eingespritzt wird, bevor das Spritzgussteil nach einem Erstarren der Kunststoffschmelze entformt wird, **dadurch gekennzeichnet, dass** der Kunststoffschmelze während des Erstarrens in der Kavität (15) durch ein Erwärmen des Düsenkerns (3) gegenüber dem Gehäuse (1) im Angussbereich Wärme zugeführt wird, sodass der Anguss beim Entformen des Spritzgussteils aufgrund des Temperaturgradienten zwischen dem erstarrten Spritzgussteil und der Kunststoffschmelze im Angussbereich entlang des Düsenschlitzes (2) abgerissen wird.

2. Spritzgussdüse zum Einbringen einer Kunststoffschmelze in eine Kavität (15) eines Spritzgusswerkzeugs mit einem erwärmbaren Düsenkern (3), mit einem den Düsenkern (3) aufnehmenden Gehäuse (1), mit einem in einer einen Düsenschlitz (2) bildenden Düsenöffnung ausmündenden, sich in Strömungsrichtung verjüngenden Düsenkanal (4) zwischen dem Gehäuse (1) und dem Düsenkern (3) und mit einem Verteilerkanal (6) zwischen einem Speisekanal (5) für die Kunststoffschmelze und dem Düsenkanal (4), **dadurch gekennzeichnet, dass** der Düsenkern (3) gegenüber dem Gehäuse (1) erwärmbar ist und dass der an den Düsenschlitz (2) angepasste Düsenkanal (4) zumindest an einen Verteilerkanal (6) anschließt, der mit dem Düsenkanal (4) über eine Drosselzone (8) strömungsverbunden ist.

3. Spritzgussdüse nach Anspruch 2, **dadurch gekennzeichnet, dass** die Drosselzone (8) eine sich über die Länge des dem Verteilerkanal (6) zugehörigen Längsabschnitts des Düsenschlitzes (2) erstreckende Verengung des Strömungsquerschnitts bildet.

4. Spritzgussdüse nach Anspruch 2 oder 3, **dadurch gekennzeichnet, dass** sich der Strömungsquerschnitt des Verteilerkanals (6) in Strömungsrichtung verjüngt.

5. Spritzgussdüse nach einem der Ansprüche 2 bis 4, **dadurch gekennzeichnet, dass** sich der Strömungswiderstand der Drosselzone (8) über die Länge des dem Verteilerkanal (6) zugehörigen Längsabschnitts des Düsenschlitzes (2) ändert.

6. Spritzgussdüse nach einem der Ansprüche 2 bis 5, **dadurch gekennzeichnet, dass** der Düsenkern (3) den Verteilerkanal (6) in Form einer gegen das Gehäuse (1) offenen Ausnehmung ausbildet.

7. Spritzgussdüse nach einem der Ansprüche 2 bis 6, **dadurch gekennzeichnet, dass** der Düsenkanal (4) den Düsenkern (3) allseitig umschließt.

8. Spritzgussdüse nach einem der Ansprüche 2 bis 7, **dadurch gekennzeichnet, dass** der Düsenkanal (4) an mindestens zwei Verteilerkanäle (6) angeschlossen ist.

9. Spritzgussdüse nach Anspruch 8, **dadurch gekennzeichnet, dass** die Verteilerkanäle (6) an ihren Strömungsenden miteinander verbunden sind.

10. Spritzgussdüse nach einem der Ansprüche 2 bis 9, **dadurch gekennzeichnet, dass** der Düsenkern (3) im Bereich des Düsenkanals (4) einen an die Drosselzone (8) anschließenden Einlaufabschnitt (9) und einen nachgeordneten, gegenüber dem Einlaufabschnitt (9) einen kleineren Neigungswinkel zur Düsenausströmrichtung aufweisenden Auslaufabschnitt (10) bildet.

11. Spritzgussdüse nach einem der Ansprüche 2 bis 10, **dadurch gekennzeichnet, dass** das Gehäuse (1) eine Wärmedämmung (12) gegenüber dem beheizten Düsenkern (3) aufweist.

12. Spritzgussdüse nach einem der Ansprüche 2 bis 11, **dadurch gekennzeichnet, dass** der Düsenkern (3) zum Schließen des Düsenschlitzes (2) verschiebbar im Gehäuse (1) gelagert ist.

13. Spritzgussdüse nach einem der Ansprüche 2 bis 12, **dadurch gekennzeichnet, dass** das Gehäuse (1) im Bereich des Düsenschlitzes (2) gekühlt ist.

14. Spritzgussdüse nach einem der Ansprüche 2 bis 13, **dadurch gekennzeichnet, dass** das Gehäuse (1) eine die Kavität (15) des Spritzgusswerkzeugs begrenzende Formplatte (16) bildet.

15. Spritzgussdüse nach einem der Ansprüche 2 bis 14, **dadurch gekennzeichnet, dass** der Düsenschlitz (2) und der in den Düsenschlitz (2) ausmündende Düsenkanal (4) mehrere vorzugsweise sternförmig angeordnete Äste (18) aufweist.

16. Spritzgussdüse nach einem der Ansprüche 2 bis 15, **dadurch gekennzeichnet, dass** der Düsenkern (3) eine kreiszylindrische Grundform mit zwei zur Längsachse des Düsenschlitzes (2) bzw. des jeweiligen Astes (18) des Düsenschlitzes (2) symmetrischen Dachflächen (17) im Bereich des Düsenkanals (4) aufweist.

17. Spritzgusswerkzeug mit einer Spritzgussdüse nach einem der Ansprüche 2 bis 16, **dadurch gekennzeichnet, dass** bei der Anordnung von zwei oder mehreren Kavitäten (15) zumindest zwei Kavitäten (15) eine gemeinsame Spritzgussdüse zugeordnet ist, deren Düsenschlitz (2) sich beidseits einer Trennwand (20) zwischen den Kavitäten (15) erstreckt.

## Claims

1. Method for producing injection-moulded parts from plastic with an injection mould which comprises an injection-moulding nozzle having a housing (1), which receives a nozzle core (3), and having a nozzle channel (4), which runs out in a nozzle slit (2) and tapers in the flow direction, between the housing (1) and the nozzle core (3), wherein the plastic melt in the form of at least one ribbon-like strand of melt is injected through a nozzle slit (2) into a cavity (15) of the injection mould before the injection-moulded part is demoulded once the plastic melt has solidified, **characterised in that** heat is supplied to the plastic melt in the region of the sprue during solidifying in the cavity (15) by means of heating of the nozzle core (3) with respect to the housing (1) and so the sprue is torn off during demoulding of the injection-moulded part along the nozzle slit (2) in the region of the sprue by reason of the temperature gradient between the solidified injection-moulded part and the plastic melt.

2. Injection-moulding nozzle for introducing a plastic melt into a cavity (15) of an injection mould, comprising a heatable nozzle core (3), a housing (1) which accommodates the nozzle core (3), a nozzle channel (4), which opens into a nozzle opening forming a nozzle slit (2) and tapers in the flow direction, between the housing (1) and the nozzle core (3), and a distribution channel (6) between a feed channel (5) for the plastic melt and the nozzle channel (4), **characterised in that** the nozzle core (3) can be heated with respect to the housing (1) and **in that** the nozzle channel (4) adjusted to the nozzle slit (2) adjoins at least one distributor channel (6) which is flow-connected to the nozzle channel (4) via a throttle zone (8).

3. Injection-moulding nozzle as claimed in claim 2, **characterised in that** the throttle zone (8) forms a constriction of the flow cross-section which extends over the length of the longitudinal section of the nozzle slit (2) associated with the distributor channel (6).

4. Injection-moulding nozzle as claimed in claim 2 or 3, **characterised in that** the flow cross-section of the distributor channel (6) tapers in the direction of flow.

5. Injection-moulding nozzle as claimed in any one of claims 2 to 4, **characterised in that** the flow resistance of the throttle zone (8) varies over the length of the longitudinal section of the nozzle slit (2) associated with the distributor channel (6).

6. Injection-moulding nozzle as claimed in any one of claims 2 to 5, **characterised in that** the nozzle core (3) forms the distributor channel (6) in form of a recess which is open towards the housing (1).

7. Injection-moulding nozzle as claimed in any one of claims 2 to 6, **characterised in that** the nozzle channel (4) encloses the nozzle core (3) on all sides.

8. Injection-moulding nozzle as claimed in any one of claims 2 to 7, **characterised in that** the nozzle channel (4) is connected to at least two distributor channels (6).

9. Injection-moulding nozzle as claimed in claim 8, **characterised in that** the distributor channels (6) are connected to each other at their flow ends.

10. Injection-moulding nozzle as claimed in any one of claims 2 to 9, **characterised in that** the nozzle core (3) forms in the region of the nozzle channel (4) an inlet section (9) which adjoins the throttle zone (8) and a downstream outlet section (10) which in comparison with the inlet section (9) has a smaller angle of inclination with respect to the nozzle outflow direction.

11. Injection-moulding nozzle as claimed in any one of claims 2 to 10, **characterised in that** the housing (1) has heat insulation (12) with respect to the heated nozzle core (3).

12. Injection-moulding nozzle as claimed in any one of claims 2 to 11, **characterised in that** the nozzle core (3) is displaceably mounted in the housing (1) for closing the nozzle slit (2).

13. Injection-moulding nozzle as claimed in any one of claims 2 to 12, **characterised in that** the housing (1) is cooled in the region of the nozzle slit (2).

14. Injection-moulding nozzle as claimed in any one of claims 2 to 13, **characterised in that** the housing (1) forms a mould plate (16) which delimits the cavity (15) of the injection mould.

15. Injection-moulding nozzle as claimed in any one of claims 2 to 14, **characterised in that** the nozzle slit (2) and the nozzle channel (4) which opens into the nozzle slit (2) has a plurality of branches (18) which are arranged preferably in a star-shaped manner.

16. Injection-moulding nozzle as claimed in any one of claims 2 to 15, **characterised in that** the nozzle core (3) has a circular-cylindrical basic shape with two roof surfaces (17) in the region of the nozzle channel (4), said roof surfaces being symmetrical with respect to the longitudinal axis of the nozzle slit (2) or the respective branch (18) of the nozzle slit (2).

17. Injection mould comprising an injection-moulding nozzle as claimed in any one of claims 2 to 16, **characterised in that** in the arrangement of two or a plurality of cavities (15) at least two cavities (15) are associated with a common injection-moulding nozzle, of which the nozzle slit (2) extends on both sides of a separating wall (20) between the cavities (15).

## Revendications

1. Procédé pour fabriquer des pièces en matière plastique moulées par injection avec un outil de moulage par injection qui comprend une buse de moulage par injection avec un corps (1) accueillant un noyau de buse (3) et avec un canal de buse (4) courant dans une fente de buse (2) en s'amenuisant dans le sens de l'écoulement entre le corps (1) et le noyau de buse (3), selon lequel la matière plastique en fusion est injectée sous la forme d'une bande de coulée dans une cavité (15) de l'outil de moulage par injection via la fente de buse (2), avant que la pièce moulée soit démoulée après un durcissement de la matière plastique en fusion, **caractérisé en ce que** de la chaleur apportée à la matière plastique en fusion pendant le durcissement dans la cavité (15) par le chauffage du noyau de buse (3) par rapport au corps (1) dans la zone de la carotte, de sorte que, lors du démoulage de la pièce moulée par injection, la carotte est arrachée du fait du gradient de température entre la pièce moulée par injection durcie et la matière plastique en fusion dans la zone de la carotte le long de la fente de buse (2).

2. Buse de moulage par injection pour injecter une matière plastique en fusion dans une cavité (15) d'un outil de moulage par injection avec un noyau de buse chauffant (3), avec un corps (1) accueillant le noyau de buse (3), avec un canal de buse (4) débouchant dans une ouverture de buse formant une fente de buse (2) et s'amenuisant dans le sens de l'écoulement entre le corps (1) et le noyau de buse (3) et avec un canal de distribution (6) situé entre un canal d'alimentation (5) pour la matière plastique en fusion et le canal de buse (4), **caractérisée en ce que** le noyau de buse (3) peut être chauffée par rapport au corps (1) et **en ce que** le canal de buse (4) adapté à la fente de buse (2) se raccorde au moins à un canal de distribution (6) qui est en communication fluidique avec le canal de buse (4) via une zone d'étranglement (8).

3. Buse de moulage par injection selon la revendication 2, **caractérisée en ce que** la zone d'étranglement (8) forme un rétrécissement de la section d'écoulement s'étendant sur la longueur du segment longitudinal de la fente de buse (2) appartenant au canal de distribution (6).

4. Buse de moulage par injection selon la revendication 2 ou 3, **caractérisée en ce que** la section d'écoulement du canal de distribution (6) s'amenuise dans le sens de l'écoulement.

5. Buse de moulage par injection selon une des revendications 2 à 4, **caractérisée en ce que** la résistance à l'écoulement de la zone d'étranglement (8) varie sur la longueur du segment longitudinal de la fente de buse (2) appartenant au canal de distribution (6).

6. Buse de moulage par injection selon une des revendications 2 à 5, **caractérisée en ce que** le noyau de buse (3) constitue le canal de distribution (6) sous la forme d'un évidement ouvert contre le corps (1).

7. Buse de moulage par injection selon une des revendications 2 à 6, **caractérisée en ce que** le canal de buse (4) entoure le noyau de buse (3) sur tous les côtés.

8. Buse de moulage par injection selon une des revendications 2 à 7, **caractérisée en ce que** le canal de buse (4) est raccordé à au moins deux canaux de distribution (6).

9. Buse de moulage par injection selon la revendication 8, **caractérisée en ce que** les canaux de distribution (6) sont reliés entre eux à leurs extrémités d'écoulement.

10. Buse de moulage par injection selon une des revendications 2 à 9, **caractérisée en ce que** le noyau de buse (3) forme dans la région du canal de buse (4) un segment d'admission (9) et un segment d'évacuation (10) présentant un angle d'inclinaison par rapport à la direction d'écoulement de la buse inférieur à celui du segment d'admission (9).

11. Buse de moulage par injection selon une des revendications 2 à 10, **caractérisée en ce que** le corps (1) possède une isolation thermique (12) par rapport au noyau de buse (3) chauffé.

12. Buse de moulage par injection selon une des revendications 2 à 11, **caractérisée en ce que** le noyau de buse (3) est monté de façon coulissante dans le corps (1) pour pouvoir fermer la fente de buse (2).

13. Buse de moulage par injection selon une des revendications 2 à 12, **caractérisée en ce que** le corps (1) est refroidi dans la zone de la fente de buse (2).

14. Buse de moulage par injection selon une des revendications 2 à 13, **caractérisée en ce que** le corps (1) forme une plaque de moulage (16) limitant la cavité (15) de l'outil de moulage par injection.

15. Buse de moulage par injection selon une des revendications 2 à 14, **caractérisée en ce que** la fente de buse (2) et le canal de buse (4) débouchant dans la fente de buse (2) possèdent plusieurs branches (18) disposées de préférence en forme d'étoile.

16. Buse de moulage par injection selon une des revendications 2 à 15, **caractérisée en ce que** le noyau de buse (3) possède une forme de base cylindrique circulaire avec, dans la région du canal de buse (4), deux surfaces de toiture (17) symétriques par rapport à l'axe longitudinal de la fente de buse (2) ou de la branche (18) correspondante de la fente de buse (2).

17. Outil de moulage par injection doté d'une buse de moulage par injection selon une des revendications 2 à 16, **caractérisé en ce que**, lorsque deux cavités (15) ou plus sont agencées, une buse de moulage par injection commune, dont la fente de buse (2) s'étend de part et d'autre d'une paroi de séparation (20) entre les cavités (15), est associée à au moins deux cavités (15).
